## Europäisches Patentamt

## European Patent Office

## Office européen des brevets

(19)

(11) Veröffentlichungsnummer: **0 092 218**

**B1**

(12) # EUROPÄISCHE PATENTSCHRIFT

(45) Veröffentlichungstag der Patentschrift:
08.04.87

(51) Int. Cl.⁴: **G 06 F 15/20**

(21) Anmeldenummer: **83103735.3**

(22) Anmeldetag: **18.04.83**

(54) **Verfahren und Anordnung zum Bedrucken von Formularen in einer Textstation.**

(30) Priorität: **21.04.82 DE 3214805**
**09.08.82 DE 3229615**

(43) Veröffentlichungstag der Anmeldung:
**26.10.83 Patentblatt 83/43**

(45) Bekanntmachung des Hinweises auf die Patenterteilung:
**08.04.87 Patentblatt 87/15**

(84) Benannte Vertragsstaaten:
**CH FR GB IT LI NL SE**

(56) Entgegenhaltungen:
**DE-A-2 713 128**

**IBM TECHNICAL DISCLOSURE BULLETIN, Band 18,
Nr. 11, April 1976, Seite 3552, New York, US; A.K.
COOK et al.: "Form log and printing"
IBM TECHNICAL DISCLOSURE BULLETIN, Band 19,
Nr. 8, Januar 1977, Seite 2821, New York, US; J.S.
COENEN et al.: "Interactive forms positioning with
delayed print"
IBM TECHNICAL DISCLOSURE BULLETIN, Band 21,
Nr. 11, April 1979, Seiten 4323-4329, New York, US;
R.J. GERLACH et al.: "System for simplified form
fill-in using CRT display"**

(73) Patentinhaber: **Siemens Aktiengesellschaft Berlin
und München, Wittelsbacherplatz 2, D-8000
München 2 (DE)**

(72) Erfinder: **Furjanic, Ivan, Ing. grad.,
Minerviusstrasse 5, D-8000 München 19 (DE)**
Erfinder: **Hochmuth, Jürgen, Dipl.- Ing. (FH),
Viebigplatz 7, D-8000 München 21 (DE)**
Erfinder: **Verfürth, Rolf- Peter, Dipl.- Ing.,
Ehrwalder Strasse 16, D-8000 München 70 (DE)**

## Beschreibung

Die Erfindung bezieht sich auf ein Verfahren und eine Anordnung zum Bedrucken von Formularen in einer Textstation entsprechend dem Oberbegriff des Patentanspruchs 1.

Beim Bedrucken von Formularen mittels einer Textstation hat ein Benutzer durch die Verwendung einer Anzeigeeinheit, an der eingegebene Zeichen zunächst dargestellt werden, die Möglichkeit, die eingegebenen Zeichen auf ihre Richtigkeit hin zu überprüfen und gegebenenfalls eine Korrektur durch eine Neueingabe durchzuführen. Es ist hierbei jedoch erforderlich, eine Zuordnung zwischen den einzelnen Positionen auf dem Formular und auf der Anzeigeeinheit herzustellen, damit der Benutzer jederzeit darüber informiert ist, an welcher Stelle auf dem Formular ein gerade eingegebenes Zeichen gedruckt werden soll.

Es wäre denkbar, ein Formular mittels eines Zeilen- und Spaltenlineals auszumessen und die Texte an den entsprechenden Koordinaten an der Anzeigeeinheit, beispielsweise eines mehrzeiligen Bildschirms darzustellen. Ein derartiges Verfahren ist verhältnismäßig aufwendig und erweist sich insbesondere dann als nachteilig, wenn innerhalb des Formulars eine Änderung des Zeilenabstands, beispielsweise von 1-zeilig auf 1 1/2-zeilig oder des Zeichenabstands, beispielsweise von 1/10 Zoll auf ein 1/12 Zoll erfolgt.

Aus "IBM Technical Disclosure Bulletin", Band 21, Nr. 11, April 1979, Seiten 4323 bis 4329 ist es bekannt, zum Bedrucken von Formularen an einer Anzeigeeinheit die Anfangs- und die Endkoordinaten eines einzugebenden Textes anzuzeigen. Diese Koordinaten (z.B. FA04) sind den Koordinaten (z.B. FA = Ordinate oder Zeile und 04 = Abszisse) der entsprechenden Stelle auf dem Formular zugeordnet. Diese Koordinaten haben lediglich Adressierungscharakter und werden mit dem erstellten Text nicht abgedruckt. Sie werden jedoch nicht an denjenigen Stellen an der Anzeigeeinheit dargestellt, deren Koordinaten den entsprechenden Stellen auf dem Formular zugeordnet sind, d. h. das an der Anzeigeeinheit dargestellte Bild ist kein unmittelbares Abbild des Formulars, so daß beispielsweise nicht ohne weiteres der Textaufbau an der Anzeigeeinheit der späteren Darstellung auf dem Formular entspricht.

Zum Bedrucken von Formularen in einer Textstation ist es aus der DE-OS 29 26 669 bekannt, die Zuordnung von einzelnen Positionen an der Anzeigeeinheit und dem zu bedruckenden Formular dadurch zu erreichen, daß bei Betätigung einer Tastatur zur Eingabe und Darstellung eines Zeichens auf der Anzeigeeinrichtung der Druckkopf des Druckwerks eine zugehörige speichergesteuerte Einstellbewegung gegebenenfalls über dem zu bedruckenden Formular ausführt, wobei noch kein Ausdrucken der Zeichen erfolgt. Bei diesem bekannten Verfahren werden jedoch keine Markierungen auf der Anzeigeeinrichtung eingetragen, so daß der Benutzer die Anfänge von zu beschreibenden Feldern an der Anzeigeeinheit durch gezieltes Positionieren bei jedem Ausfüllen eines Formulars neu ermitteln muß.

Der Erfindung liegt daher die Aufgabe zugrunde, ein Verfahren und eine Anordnung anzugeben, bei deren Verwendung das Ausfüllen von Formularen auf einfache Weise und die auch dann geeignet sind, wenn unterschiedliche Zeilen- oder Zeichenabstände auf ein und demselben Formular ausgeführt werden sollen.

Erfindungsgemäß wird die Aufgabe bei dem Verfahren der eingangs genannten Art durch die im Patentanspruch 1 angegebenen Merkmale gelöst.

Das Verfahren gemäß der Erfindung hat den Vorteil, daß das Formular an der Anzeigeeinheit sehr schnell ausgefüllt werden kann, wenn die Positionen der zu beschreibenden Stellen erfaßt und durch die Markierungen gekennzeichnet sind. Das Erfassen erfolgt unter Verwendung eines Koordinatenmusters, das entweder als Folie über das Formular gelegt wird oder auf ein gleiches Formular gedruckt wird. Ein besonders vorteilhaftes Erfassen der Koordinaten wird dadurch erreicht, daß das Druckwerk synchrone Bewegung mit einer an der Anzeigeeinheit dargestellten Schreibmarke durchführt. Die Markierungen können gleichzeitig als Tabelliermarken ausgebildet sein, so daß ein Flächentabulator erzeugt wird und beim Betätigen einer entsprechenden Tabulatortaste die Schreibmarke am Bildschirm auf die jeweils nächste Markierung springt.

Die Markierungen sind vorteilhafterweise pfeilförmig ausgebildet und kennzeichnen jeweils den Beginn der zu beschreibenden Bereiche und es ist auch möglich, zusätzlich das Ende der zu beschreibenden Bereiche zu kennzeichnen, wobei dann die pfeilförmige Markierung in der entgegengesetzten Richtung gerichtet ist. Um ein Ausdrucken der Markierungen auf dem Formular zu verhindern, wird die Codierung der Markierung so gewählt, daß diese beim Ausdrucken als Leerzeichen dargestellt werden. Als Gedächtnisstütze können neben den Markierungen kurze Texte dargestellt sein, die die jeweils zu beschreibende Stelle kennzeichnen.

Eine vorteilhafte Anordnung zur Durchführung des Verfahrens ist im Patentanspruch 10 gekennzeichnet. Die Textstation enthält Steuereinheiten, die nach dem Ansteuern der entsprechenden Koordinaten am Bildschirm, beispielsweise mittels einer Schreibmarke und nach dem Betätigen einer entsprechenden Taste an der Tastatur die Markierung darstellt und speichert. Beim Ausdrucken der eingegebenen Texte setzt die Steuereinheit die Markierungen und die gegebenenfalls zusätzlich vorgesehenen Texte in Leerzeichen um, die nicht abgedruckt werden.

Im folgenden werden das Verfahren und eine Anordnung zur Durchführung des Verfahrens gemäß der Erfindung anhand von Zeichnungen näher erläutert. Es zeigen

Fig. 1 einen Ausschnitt aus einem als Briefbogen ausgebildeten Formular,

Fig. 2 einen Ausschnitt aus einem Koordinatenmuster,

Fig. 3 einen Ausschnitt aus einem mit dem Koordinatenmuster bedruckten Formular,

Fig. 4 eine Darstellung von Markierungen und Texten an einer Anzeigeeinheit,

Fig. 5 eine Darstellung eines weiteren Formulars,

Fig. 6 eine Darstellung von mit Zusatztexten versehenen Markierungen an der Anzeigeeinheit,

Fig. 7 ein Blockschaltbild einer Anordnung zur Durchführung des Verfahrens.

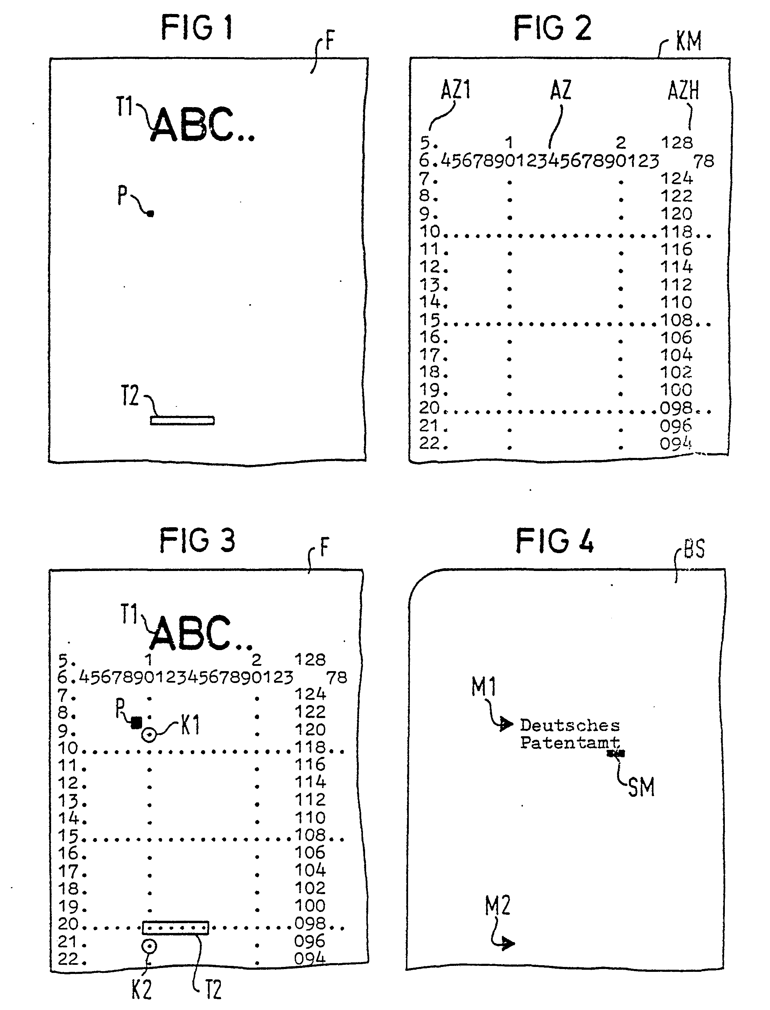

Auf dem in Fig. 1 dargestellten Formular ist als Text T1 auf einem Formular F ein Absender "ABC" aufgedruckt. Weiterhin ist auf dem Formular F ein Punkt P abgedruckt, der für den Benutzer eine Orientierungshilfe darstellt und diejenige Stelle angibt, an der der Adressat eingetragen werden soll. Als Text T2 ist der bei Briefbögen übliche Text "Ihr Zeichen" aufgedruckt. Unterhalb dieses Textes werden Kurzzeichen oder ein Aktenzeichen eingetragen, auf das sich das entsprechende Schreiben bezieht. Auf dem Formular F sind noch weitere Texte vorgesehen, die hier nicht dargestellt sind, wie beispielsweise die Texte "Unser Zeichen", "Ort und Datum" usw.

Falls das Formular F an einer Textstation unter Verwendung einer Anzeigeeinheit, beispielsweise eines Bildschirms ausgefüllt werden soll, werden die an dem Punkt P und nach dem Text T2 einzutragenden Texte, sowie das gesamte Schreiben zunächst am Bildschirm erstellt. Der Bildschirm stellt im allgemeinen ein Abbild des jeweiligen Aufzeichnungsträgers dar und es muß sichergestellt sein, daß die entsprechenden Texte an den richtigen Stellen des Formulars F abgedruckt werden.

In Fig. 2 ist ein Koordinatenmuster KM dargestellt, wie es in der Textstation in einem Speicher, beispielsweise auf einer Floppy Disk gespeichert ist. Dieses Koordinatenmuster KM ist für ein Formular F mit dem Format DIN A4 vorgesehen, das mit Einheitsschritten von 1/10 Zoll beschrieben werden soll. Das Koordinatenmuster KM enthält links in vertikaler Richtung, beginnend mit der Zeile 5 die Anzahl der Zeilen AZ1, die bei einzeiliger Schreibweise auf dem Formular F abdruckbar sind. Weiterhin enthält das Koordinatenmuster die Anzahl AZH der Halbzeilen, mit der das Formular F beschreibbar ist. Diese Anzahl AZH ist bezogen auf den unteren Rand. Sie gibt die Anzahl der jeweils noch freien Halbzeilen an. Diese Anzahl kann beispielsweise auch am Bildschirm dargestellt werden. In horizontaler Richtung ist die Anzahl AZ der Zeichen innerhalb der Zeilen angegeben. Aus Gründen der Übersichtlichkeit werden die Anzahlen AZ1, AZH und AZ nur an wenigen Stellen des Koordinatenmusters KM abgedruckt und ansonsten durch Punkte, beispielsweise nach jeweils 5 oder 10 Einheiten dargestellt.

Zum Ermitteln der Koordinaten der zu beschreibenden Stellen auf dem Formular F wird ein Exemplar des Formulars F in eine Druckereinheit der Textstation eingespannt und mit dem entsprechenden gespeicherten Koordinatenmuster KM bedruckt.

Die Fig. 3 zeigt ein mit dem Koordinatenmuster KM bedrucktes Formular F entsprechend Fig. 1. Die Koordinaten K1 und K2 der zu beschreibenden Stellen auf dem Formular F können auf einfache Weise aus dem bedruckten Formular F entnommen werden. Beispielsweise hat die dem Punkt P nächstliegende Koordinate K1 Anzahl der Halbzeilen AZH 120 und Anzahl der Zeichen AZ 10. In entsprechender Weise hat die Koordinate K2 die Koordinatenwerte 096 und 10.

Die Koordinaten K1 und K2 können auch ermittelt werden, wenn das Koordinatenmuster KM auf eine durchsichtige Folie aufgebracht wird und diese über das Formular F gelegt wird.

Bei dem in Fig. 4 dargestellten Ausschnitt des Bildschirms BS sind an den den Koordinaten K1 und K2 entsprechenden Stellen Markierungen M1 und M2 dargestellt. Die Eingabe der Markierungen erfolgt mittels der Tastatur durch Aufruf der entsprechenden Anzahlen AZ1 oder AZH und der Anzahl AZ. Die Eingabe kann beispielsweise dadurch erfolgen, daß eine Schreibmarke SM an die entsprechende Stelle gebracht wird und eine Markierungstaste betätigt wird. Die Markierungen M1 und M2 sowie eine beliebige Anzahl von weiteren Markierungen entsprechend weiteren Koordinaten K werden am Bildschirm BS dargestellt und in einem Speicher, beispielsweise ebenfalls auf einer Floppy Disk der Textstation gespeichert.

Nach einem Aufrufen der Markierungen M kann eine beliebige Anzahl von Formularen F am Bildschirm unter Verwendung der Tastatur ausgefüllt werden. Anschließend werden die Formulare F in die Druckereinheit eingelegt und entsprechend bedruckt. Hierbei wird ein Ausdrucken der Markierungen M1 und M2 gesperrt, so daß nur jeweils die entsprechenden Texte an den dafür vorgesehenen Stellen auf Formularen F ausgedruckt werden.

Anstelle des Bildschirms BS kann selbstverständlich auch eine einzeilige Anzeige verwendet werden, an der die entsprechenden Markierungen M dargestellt werden, wenn die entsprechende Zeile adressiert wird.

Zum schnellen Ausfüllen des Formulars F ist es günstig, wenn die Markierungen M gleichzeitig Tabulatormarken eines Flächentabulators darstellen. Beim Betätigen einer Tabulatortaste springt dann die Schreibmarke an die jeweils nächste Markierung M. Die Markierungen M sind pfeilförmig ausgebildet und zeigen jeweils den Beginn einer zu beschreibenden Stelle an. Es ist auch möglich, zusätzlich jeweils das Ende eines zu beschreibenden Bereichs darzustellen. Hierzu kann beispielsweise der Pfeil in die jeweils entgegengesetzte Richtung weisen. Es ist auch möglich, den jeweils zu beschreibenden Bereich am Bildschirm BS optisch besonders hervorzuheben.

Unter Verwendung des Koordinatenmusters KM kann sehr schnell überprüft werden, ob ein Formular F normgerecht erstellt wurde, da dann die zu beschreibenden Stellen einzelnen Koordinatenpunken eindeutig zugeordnet werden können. Unter Verwendung des Koordinatenmusters KM ist es infolge der Anzahl AZH möglich, innerhalb des Formulars den Zeilenabstand, beispielsweise von 1-zeilig auf 1 1/2-zeilig zu verändern, da für die Orientierung die Anzahl AZH unabhängig vom eingestellten Zeilenabstand ausreicht. In diesem Fall kann die Anzahl AZ1 nicht benutzt werden. Bei einer Änderung des Zeichenabstandes, beispielsweise von 1/10 Zoll auf ein 1/12 Zoll wird zweckmäßigerweise ein anderes Koordinatenmuster benutzt. Es wäre zwar hier auch denkbar, die Anzahl der jeweils kleinsten gemeinsamen Einheit darzustellen, jedoch könnte dies leicht zu Unübersichtlichkeit führen. Auch für andere Formulare, wie beispielsweise DIN A5 wird ein anderes Koordinatenmuster KM verwendet.

Eine weitere Möglichkeit zum Ermitteln der Koordinaten besteht darin, daß das Formular F in die Druckereinheit eingespannt wird und daß die entsprechenden zu beschreibenden Stellen durch eine Positionierung des Druckkopfs gekennzeichnet werden. Die Positionierung des Druckkopfs erfolgt in diesem Fall unter Verwendung einer Schreibmarkensteuerung, die die Schreibmarke SM am Bildschirm BS verschiebt und synchron hierzu den Druckkopf bewegt, jedoch einen Abdruck von Zeichen verhindert.

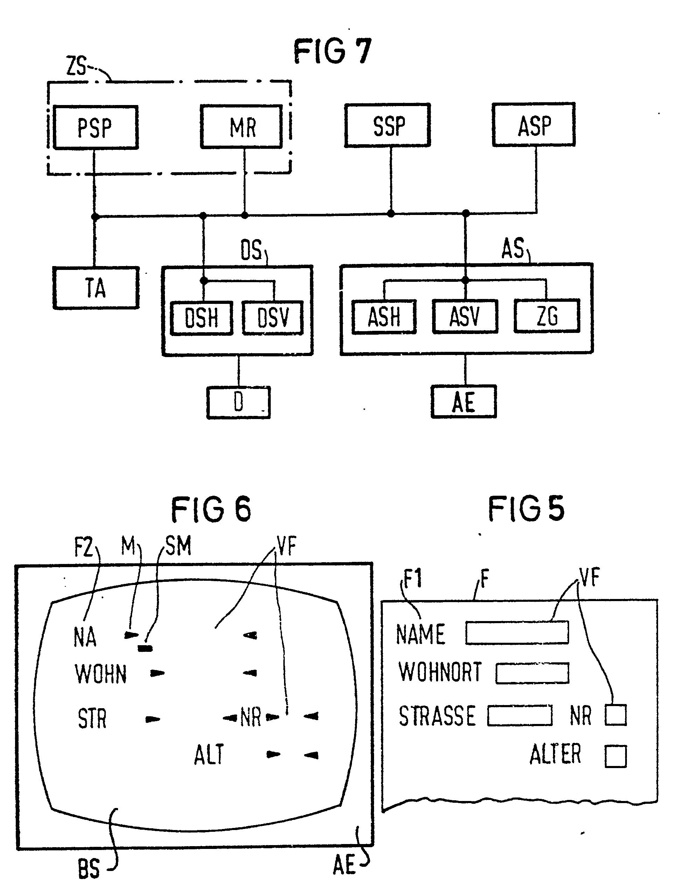

Bei der Darstellung in Fig. 5 ist ein Formular F gezeigt, das bedruckte Festfelder F1 und auszufüllende Bereiche aufweist, die als Variablenfelder VF gekennzeichnet sind.

Die Darstellung in Fig. 6 zeigt eine Darstellung entsprechend der Markierungen M am Bildschirm BS der Anzeigeeinheit AE. Die Variablenfelder VF sind durch Markierungen M gekennzeichnet, die am Anfang und/oder am Ende jedes Variablenfeldes VF angeordnet sind. Zusätzlich können vor den Markierungen M als Gedächtnisstütze und zur Erleichterung der Zuordnung Kurztexte F2 vorgesehen sein, die den Festfeldern F1 zugeordnet sind. Auch in diesem kann nun unter Verwendung der Schreibmarke SM eine Vielzahl von Formularen zunächst am Bildschirm BS ausgefüllt werden und anschließend auf den entsprechenden Formularen F ausgedruckt werden. Selbstverständlich werden in diesem Fall die Kurztexte F2 und die Markierungen M nicht ausgedruckt.

Zum Eintragen der Markierungen M an den richtigen Stellen führen, wie bereits erwähnt, die Schreibmarke SM und Druckkopf der Druckereinheit in der Weise eine synchrone Bewegung aus, daß die Schreibmarke SM auf eine Schreibstelle mit den gleichen Koordinaten hinweist, die auch der Druckkopf in Relation zu dem zu bedruckenden Formular F einnimmt. Die Koordinaten einer am Anfang eines Variablenfeldes VF befindlichen Markierungen M auf der Anzeigeeinheit AE ergeben sich aus der vertikalen koordinate und der um eine Schreibstelle verminderten horizontalen Koordinate der Position der Schreibmarke SM bzw. der Position des Druckkopfs. Dieser Fall ist in Fig. 6 für die linke obere Markierung M angegeben. Man erkennt, daß sich diese Markierung M nicht direkt oberhalb der Position der Schreibmarke SM befindet, sondern nach links um eine Schreibstelle versetzt ist.

Entsprechend ergeben sich die Koordinaten einer am Ende eines Variablenfeldes VF befindlichen Markierung M aus der vertikalen Koordinate und der um eine Schreibstelle erhöhten horizontalen Koordinate der Position der Schreibmarke SM bzw. der Position des Druckkopfs. Hierdurch erreicht man, daß sich ein zu beschreibendes Variablenfeld VF genau zwischen den Pfeilspitzen zweier Markierungen M befindet. Somit sind die Koordinaten der einzelnen Markierungen M den Koordinaten der entsprechenden Stellen auf dem Formular F eindeutig zugeordnet und können in dem Speicher abgespeichert werden.

Der eigentliche Druckvorgang wird solange ausgesetzt, auf der Anzeigeeinheit AE alle notwendigen Korrekturen bezüglich der in die Variablenfelder VF eingegebenen Zeichen erfolgt sind. Bei Auslösung des Druckvorgangs werden die im Arbeitsspeicher abgespeicherten Zeichen ausgelesen und anschließend mittels des Druckkopfs an den entsprechenden Stellen auf dem Formular F ausgedruckt. Hierbei werden nur die eingegebenen Zeichen selbst gedruckt, während die Markierungen M und gegebenenfalls die Kurztexte F2 nicht gedruckt werden.

Die in Fig. 7 dargestellte Anordnung zur Durchführung Verfahrens wird aus einer Textstation gebildet. Diese Textstation weist eine aus einem Programmspeicher PSP und einem Mikrorechner MR bestehende Zentralsteuerung ZS sowie Speichereinrichtungen in Form des Arbeitsspeichers ASP und eines Sekundärspeichers SSP auf. Weiterhin enthält die Textstation eine Tastatur TA zur Eingabe von Zeichen sowie das Druckwerk D und die Anzeigeeinheit AE. Die Anzeigeeinheit AE ist hierbei vorzugsweise als Bildschirm BS ausgebildet. Für das Druckwerk D und die Anzeigeeinheit AE ist jeweils eine Steuereinrichtung DS bzw. AS vorgesehen. Die Steuereinrichtung DS für das Druckwerk D enthält ein Steuerteil DSH zur horizontalen Bewegung des Druckkopfs sowie ein Steuerteil DSV zur Drehung der Druckerwalze. Die Steuereinrichtung AS für die Anzeigeeinheit AE enthält neben einem Zeichengenerator ZG jeweils einen Steuerteil ASH bzw. ASV für die horizontale bzw. vertikale Bewegung der Schreibmarke SM. Die beiden Steuereinrichtungen DS und AS stehen über einen Bus miteinander und mit den übrigen Baueinheiten in Verbindung.

Zum Bedrucken des in das Druckwerk D eingespannten Formulars F werden die über die Tastatur TA eingegebenen Zeichen zunächst noch nicht gedruckt, sondern in dem Arbeitsspeicher ASP abgespeichert und an der Anzeigeeinheit AE dargestellt. Hierdurch besteht die Möglichkeit, die eingegebenen Zeichen auf ihre Richtigkeit hin zu überprüfen und gegebenenfalls eine Korrektur durch eine Neueingabe durchzuführen. Die im Arbeitsspeicher ASP abgespeicherten Zeichen werden also erst zu einem späteren Zeitpunkt ausgelesen und anschließend mittels des Druckwerks D an den entsprechenden Stellen auf dem Formular ausgedruckt. Für die hierfür erforderliche Zuordnung zwischen den einzelnen Positionen auf dem Formular F und auf der Anzeigeeinheit AE werden die Markierungen M an der Anzeigeeinheit AE dargestellt.

Zum Darstellen der Markierungen M an der Anzeigeeinheit AE wird die Schreibmarke SM am die entsprechende Position am Bildschirm gebracht. Anschließend wird eine Taste an der Tastatur TA betätigt und am Bildschirm wird die Markierung M dargestellt. Die Ermittlung der Position kann nun einerseits aufgrund des Koordinatenmusters KM erfolgen, wobei am Bildschirm BS der Anzeigeeinheit AE jeweils, beispielsweise in einer Anzeigezeile am unteren Rand des Bildschirms BS die entsprechenden Anzahlen AZ1 oder AZH und AZ dargestellt werden. Die Anzahl AZ kann durch ein üblicherweise vorgesehenes Zeilenlineal erfolgen und die Anzahlen AZ1 oder AZH geben in an sich bekannter Weise die jeweilige Schreibzeile bzw. die Anzahl der noch freien Zeilen an.

Bei einer Abtastung des Formulars unter Verwendung des Druckkopfs führt der Druckkopf auf dem in der Druckereinheit D eingespannten Formular F eine Bewegung durch, die synchron zur Bewegung der Schreibmarke SM ist. Bei der Positionierung der Schreibmarke SM an einer Stelle, die der Position des Druckkopfs am Anfang und/oder am Ende eines Variablenfelds VF entspricht, wird wiederum die entsprechende Taste an der Tastatur TA betätigt und die entsprechenden Markierungen M werden am Bildschirm BS dargestellt. Zusätzlich können in diesem Fall mittels der Tastatur TA die Kurztexte F2 eingegeben werden, die beim eigentlichen Druckvorgang, ebenso wie die Markierungen nicht ausgedruckt werden.

Um bei öfter zu bedruckenden Formularen F eine hierfür erforderliche mehrmalige Ermittlung der Koordinaten für die einzelnen Markierungen M zu vermeiden, ist der Sekundärspeicher SS vorgesehen, in dem die einmalig ermittelten Koordinaten der einzelnen Markierungen M archiviert werden können. Dieser Sekundärspeicher SSP ist hierbei vorzugsweise als Floppy Disk ausgestaltet.

**Patentansprüche**

1. Verfahren zum Bedrucken von Formularen in einer Textstation, bei dem mittels einer Tastatur eingegebene Zeichen in einem Arbeitsspeicher abgespeichert und an einer Anzeigeeinheit dargestellt werden und bei dem die im Arbeitsspeicher abgespeicherten Zeichen erst nach der Eingabe eines Druckbefehls ausgelesen werden und an den entsprechenden Stellen des Formulars ausgedruckt werden, dadurch gekennzeichnet, daß an der Anzeigeeinheit (AE) an denjenigen Stellen, deren Koordinaten (K1, K2) den entsprechenden Stellen auf dem Formular (F) zugeordnet sind, Markierungen dargestellt werden und daß beim Abdrucken der mittels der Tastatur (TA) und der Anzeigeeinheit (AE) an den durch die Markierungen (M) gekennzeichneten Stellen eingegebenen Texte die Ausgabe det Markierungen (M) auf dem Formular (F) gesperrt wird.

2. Verfahren nach Anspruch 1, dadurch gekennzeichnet, daß in einem Speicher (SSP) ein Koordinatenmuster (KM) gespeichert ist und auf ein gleiches Formular (F) abgedruckt wird.

3. Verfahren nach Anspruch 1, dadurch gekennzeichnet, daß ein Koordinatenmuster (KM) auf einer durchsichtigen Folie gespeichert ist, die auf das Formular (F) auflegbar ist.

4. Verfahren nach Anspruch 1, dadurch gekennzeichnet, daß eine Schreibmarke (SM) der Anzeigeeinheit (AE) und ein Druckkopf des Druckwerks (D) in der Weise eine synchrone Bewegung ausführen, daß die Schreibmarke (SM) auf eine Schreibstelle mit den entsprechenden Koordinaten (K1, K2) hinweist, die auch der Druckerwagen in Relation zu dem zu bedruckenden Formular (F) einnimmt und daß nach dem Betätigen einer entsprechenden Taste an der Tastatur (TA) am Bildschirm eine entsprechende Markierung (M) dargestellt wird.

5. Verfahren nach einem der Ansprüche 1 bis 4, dadurch gekennzeichnet, daß die Markierungen (M) jeweils am Anfang und/oder am Ende eines zu beschreibenden Variablenfeldes (VF) dargestellt werden.

6. Verfahren nach einem der Ansprüche 1 bis 3, dadurch gekennzeichnet, daß die Koordinaten (K1, K2) der Markierungen (M) in einem Speicher (SSP, ASP) gespeichert werden.

7. Verfahren nach einem der Ansprüche 1 bis 6, dadurch gekennzeichnet, daß im Speicher (SSP, ASP) neben den Koordinaten (K1, K2) der einzelnen Markierungen (M) auch ein Kurztext (T2) gespeichert ist.

8. Verfahren nach einem der Ansprüche 1 bis 7, dadurch gekennzeichnet, daß die Markierungen (M) gleichzeitig Tabelliermarken eines Flächentabulators darstellen.

9. Verfahren nach einem der Ansprüche 1 bis 8, dadurch gekennzeichnet, daß sich die Koordinaten (K1, K2) einer am Anfang bzw. Ende eines Variablenfeldes (VF) befindlichen Markierung (M) aus der vertikalen Koordinate und der um eine Schreibstelle verminderten bzw.

erhöhten horizontalen Koordinate der Position der Schreibmarke (SM) ergibt.

10. Schaltungsanordnung zur Durchführung des Verfahrens nach Anspruch 1, dadurch gekennzeichnet, daß die Textstation Steuereinheiten (ZS, DS, AS) enthält, die an der Anzeigeeinheit (AE) die Markierungen (M) an den durch die Koordinaten (K1, K2) festgelegten Stellen darstellen, die in einem Speicher (SSP, ASP) diese Markierungen (M) speichern und die beim Ausdrucken der eingegebenen Texte das Ausdrucken dieser Markierungen (M) sperren.

## Claims

1. A method of printing forms in a text terminal, wherein characters input by means of a keyboard are stored in a working store and are displayed on a display unit and wherein a print command must first be input before the characters stored in the working store are read out and printed at the appropriate positions on the form, characterised in that on the display unit (AE) marks are displayed at those positions whose coordinates (K1, K2) are assigned to the corresponding positions on the form (F) and that in the print-out of the texts which have been input by means of the keyboard (TA) and the display unit (AE) at the positions identified by the marks (M) the output of the marks (M) on the form (F) is blocked.

2. A method as claimed in claim 1, characterised in that a coordinate pattern (KM) is stored in a store (SSP) and is printed on an identical form (F).

3. A method as claimed in claim 1, characterised in that a coordinate pattern (KM) is stored on a transparent foil which can be placed on to the form (F).

4. A method as claimed in claim 1, characterised in that a cursor (SM) on the display unit (AE) and a printing head of the printing mechanism (D) implement a synchronous movement in that the cursor (SM) points to a printing location which has the corresponding coordinates (K1, K2) and which is assumed by the printer carriage in relation to the form (F) which is to be printed and that following the actuation of a corresponding key of the keyboard (TA) a corresponding mark (M) is displayed on the screen.

5. A method as claimed in one of the claims 1 to 4, characterised in that the marks (M) are each displayed at the start and/or at the end of a variable array (VF) which is to be printed.

6. A method as claimed in one of the claims 1 to 3, characterised in that the coordinates (K1, K2) of the marks (M) are stored in a store (SSP, ASP).

7. A method as claimed in one of the claims 1 to 6, characterised in that in addition to the coordinates (K1, K2) of the individual marks (M), a short text (T2) is also stored in the store (SSP, ASP).

8. A method as claimed in one of the claims 1 to 7, characterised in that the marks (M) simultaneously represent tabulation marks of a surface tabulator.

9. A method as claimed in one of the claims 1 to 8, characterised in that the coordinates (K1, K2) of a mark (M), located at the start or end of a variable array (VF), are derived from the vertical coordinate and the horizontal coordinate - reduced or increased by one printing position - of the position of the cursor (SM).

10. A circuit arrangement for implementing the A method claimed in claim 1, characterised in that the text terminal includes control units (ZS, DS, AS) which, on the display unit (AE), display the marks (M) at the positions governed by the coordinates (K1, K2), which store these marks (M) in a store (SSP, ASP) and which block the print-out of these marks (M) when the input texts are printed.

## Revendications

1. Procédé pour imprimer des formulaires dans un poste de traitement de textes, selon lequel des signes introduits au moyen d'un clavier sont mémorisés dans une mémoire de travail et sont représentés sur une unité d'affichage, et selon lequel les signes mémorisés dans la mémoire de travail sont lus uniquement après l'introduction d'une instruction d'impression et sont imprimés aux emplacements correspondants du formulaire, caractérisé par le fait que dans l'unité d'affichage AE, des marques sont représentées aux emplacements, dont les coordonnées (K1, K2) sont associées aux emplacements correspondants sur le formulaire (F), et que lors de l'impression des textes introduits au moyen du clavier (TA) et de l'unité d'affichage (AE) aux emplacements caractérisés par les marques (M), la délivrance des marques (M) sur le formulaire (F) est bloquée.

2. Procédé suivant la revendication 1, caractérisé par le fait qu'un modèle de coordonnées (KM) est mémorisé dans une mémoire (SSP) et est imprimé sur un formulaire (F) identique.

3. Procédé suivant la revendication 1, caractérisé par le fait qu'un modèle de coordonnées (KM) est mémorisé sur une feuille transparente, qui peut être apposée sur le formulaire (F).

4. Procédé suivant la revendication 1, caractérisé par le fait qu'une marque d'enregistrement (SM) de l'unité d'affichage (AE) et une tête d'impression du mécanisme d'impression (D) exécutent un déplacement synchrone de telle sorte que la marque d'enregistrement (SM) indique un emplacement d'enregistrement possédant les coordonnées correspondantes (K1, K2), que prend également le chariot d'impression par rapport au formulaire (F) devant être imprimé, et qu'après l'actionnement d'une touche correspondante sur le clavier (TA), une marque correspondante (M) est représentée sur l'écran.

5. Procédé suivant l'une des revendications 1 à 4, caractérisé par le fait que les marques (M) sont représentées respectivement au début et/ou à la fin d'un ensemble (VF) de variables devant être décrit.

6. Procédé suivant l'une des revendications 1 à 3, caractérisé par le fait que les coordonnées (K1, K2) des marques (M) sont mémorisées dans une mémoire (SSP, ASP).

7. Procédé suivant l'une des revendications 1 à 6, caractérisé par le fait que, également, un texte bref (T2) est mémorisé dans les mémoires (SSP, ASP) en dehors des coordonnées (K1, K2) des marques individuelles (M).

8. Procédé suivant l'une des revendications 1 à 7, caractérisé par le fait que les marques (M) représentent simultanément des marques de tabulation et un tabulateur plat.

9. Procédé suivant l'une des revendications 1 à 8, caractérisé par le fait que les coordonnées (K1, K2) d'une marque (M) située au début ou à la fin d'une zone variable (VF) sont fournies par la coordonnée verticale et par la coordonnée horizontale, réduite ou accrue d'une position d'enregistrement, de la position de la marque d'enregistrement (SM).

10. Montage pour la mise en oeuvre du procédé suivant la revendication 1, caractérisé par le fait que le poste de traitement de textes contient des unités de commande (ZS, DS, AS), qui représentent, sur l'unité d'affichage (AE), les marques (M) aux emplacements fixés par les coordonnées (K1, K2), mémorise ces marques dans une mémoire (SSP, ASP) et bloque l'impression de ces marques (M) lors de l'impression des textes introduits.

## FIG 1

F

T1 ABC..

P

T2

## FIG 2

KM

AZ1     AZ     AZH

```
5.              1           2      128
6.45678901234567890123       78
7.           .           .     124
8.           .           .     122
9.           .           .     120
10.................................118..
11.          .           .     116
12.          .           .     114
13.          .           .     112
14.          .           .     110
15.................................108..
16.          .           .     106
17.          .           .     104
18.          .           .     102
19.          .           .     100
20.................................098..
21.          .           .     096
22.          .           .     094
```

## FIG 3

F

T1 ABC..

```
5.              1           2      128
6.45678901234567890123       78
7.     P     .           .     124
8.     ■     .           .     122
9.        K1 .           .     120
10.................................118..
11.          .           .     116
12.          .           .     114
13.          .           .     112
14.          .           .     110
15.................................108..
16.          .           .     106
17.          .           .     104
18.          .           .     102
19.          .           .     100
20.....[        ]........098..
21.    .      .           .     096
22.          .           .     094
```

K2    T2

## FIG 4

BS

M1

→ Deutsches
Patentamt
SM

M2
→

# FIG 7

ZS

| PSP | MR | SSP | ASP |

TA

DS

| DSH | DSV |

D

AS

| ASH | ASV | ZG |

AE

# FIG 6

F2  M  SM  VF

NA

WOHN

STR    NR

ALT

BS          AE

# FIG 5

F1  F  VF

NAME

WOHNORT

STRASSE    NR

ALTER